# EUROPEAN PATENT SPECIFICATION

(11) **EP 2 648 242 B1**
(45) Date of publication and mention of the grant of the patent: **03.06.2020**
(21) Application number: 11845828.0
(22) Date of filing: 17.11.2011
(51) Int. Cl.: H01M 2/10, H01M 2/12, H01M 10/48, H01M 10/058

(54) **BATTERY PACK**
BATTERIEPACKUNG
BLOC-BATTERIE

(30) Priority: 30.11.2010 JP 2010267488
(43) Date of publication of application: 09.10.2013
(73) Proprietor: Panasonic Intellectual Property Management Co., Ltd., Osaka-shi, Osaka 540-6207 (JP)
(72) Inventor: YASUI, Shunsuke, Osaka 540-6207 (JP); TAKASAKI, Hiroshi, Osaka 540-6207 (JP); KISHII, Daisuke, Osaka 540-6207 (JP); ASAIDA, Yasuhiro, Osaka 540-6207 (JP)
(74) Representative: Grünecker Patent- und Rechtsanwälte PartG mbB
(86) International application number: PCT/JP2011/006408
(87) International publication number: WO 2012/073438

(56) References cited:
- EP-A1- 0 856 897
- WO-A2-02/49126
- WO-A2-2005/119813
- GB-A- 1 205 943
- JP-A- 2007 027 011
- JP-A- 2008 112 715
- JP-A- 2008 251 308
- JP-A- 2011 070 871
- JP-U- H0 628 991
- JP-U- 60 080 665
- US-A1- 2009 004 553
- US-A1- 2009 155 672

## Description

### TECHNICAL FIELD

The present invention relates to battery packs including a plurality of cells accommodated in a case.

### BACKGROUND ART

Battery packs including a plurality of batteries accommodated in a case to be capable of outputting a predetermined voltage and capacitance are widely used as power supplies of various devices, vehicles, etc. and household power supplies. Specifically, the technique of forming modules by connecting general-purpose batteries in parallel and/or in series to be capable of outputting a predetermined voltage and capacitance and being charged, and combining the battery modules in many ways to be applicable to various applications is beginning to be used. In the module formation technique, the performance of the batteries accommodated in the battery modules is enhanced to reduce the size and the weight of the battery modules themselves. Thus, the module formation technique has various advantages such as improvement of workability in assembling battery packs, and improvement of flexibility in mounting the battery packs in areas of limited space, such as a vehicle.

On the other hand, along with enhancement of the performance of batteries accommodated in battery modules, ensuring safety of the battery modules formed by assembling a plurality of batteries becomes important in addition to ensuring safety of batteries themselves. In particular, when gas is generated in a battery due to heat generated by an internal short circuit, or the like in the battery, and high-temperature gas is released outside the battery by operation of a safety valve, peripheral batteries are subjected to the high-temperature gas, which influences normal batteries, so that the normal batteries may be deteriorated in a chain reaction.

To address such a problem, Patent Document 1 describes a power supply device in which a case accommodating a plurality of batteries is partitioned by a partitioning wall into a battery chamber accommodating the batteries, and an exhaust chamber through which the high-temperature gas released from the battery is released, wherein the power supply device includes an exhaust mechanism which is configured such that an opening of a safety valve of each battery is in communication with the exhaust chamber. With the exhaust mechanism thus configured, the high-temperature gas released through the safety valve of the battery is allowed to flow into the exhaust chamber without flowing into the battery chamber, and is released outside the case via an outlet of the case. This can prevent peripheral batteries from being subjected to the high-temperature gas released from an abnormal battery, so that the influence on the normal batteries can be reduced.

### CITATION LIST

### PATENT DOCUMENT

PATENT DOCUMENT 1: Japanese Patent Publication No. 2007-27011
PATENT DOCUMENT 2: Japanese Patent Publication No. 2010-126015

Document WO 2005/119813 A2 relates to a multi-cell battery in which a plurality of electrochemical cells are disposed in a battery case. The battery case includes one or more partitions which divide the interior of the case into a plurality of cell compartments that house the electrochemical cells. The battery case includes at least one gas channel have a tortuous pathway designed to trap electrolyte which may escape from the cell compartments. A unique battery terminal may be molded into the battery case.

Document US 2009/004553 A1 relates to a power storage unit has: a plurality of power storage modules each constituted of a power generation element which in a power generation element case containing the power generation element; and a power storage unit case containing the power storage modules and an insulative liquid, wherein at least two of the power storage modules have a first valve that switches from a closed state to an open state in response to the pressure in the power generation element case increasing up to a first threshold and a second valve that switches from a closed state to an open state in response to the pressure at the outside of the power generation element case increasing up to a second threshold.

### SUMMARY OF THE INVENTION

### TECHNICAL PROBLEM

The exhaust mechanism described in Patent Document 1 is advantageous in that the exhaust chamber has a hermetically closed structure, so that gas flowing through the opening of the battery into the exhaust chamber can be prevented from flowing into the battery chamber, which can prevent deterioration of the normal batteries in a chain reaction.

However, the technique described in Patent Document 1 does not address how gas is handled in exhausting the gas. For example, battery packs for vehicle use are installed under seats in many cases. Thus, if gas is released into a passenger compartment without taking any measures, passengers may be in a dangerous situation. Also when battery packs are installed on a side of an exterior wall of a house as a household power supply, the released gas may be blown to people who passes by the power supply by chance.

More importantly, when the battery is in contact with water, a short circuit may be formed, and thus it is necessary to prevent entry of water into the battery pack. In order to prevent the entry of water, the battery pack has to be hermetically sealed, but hermetically sealing the battery pack and the above-described function of rapidly releasing gas are in a trade-off relationship.

In view of the foregoing, the present invention was devised. It is an objective of the present invention to provide a battery pack in which prevention of entry of water from the outside is ensured, and when gas is generated from a battery, the gas is safely released to the outside.

### SOLUTION TO THE PROBLEM

This object is solved by the subject matter of claim 1.

### ADVANTAGES OF THE INVENTION

With the above configuration, it is possible to ensure prevention of entry of water from the outside into the battery pack, and when gas is generated from the cell, it is possible to ensure release of the gas outside. The gas release duct is provided, so that an exit of the gas can be located at a safe position.

### BRIEF DESCRIPTION OF THE DRAWINGS

[FIG. 1] FIG. 1 is a cross-sectional view schematically illustrating a configuration of a cell used in a battery module of an embodiment.
[FIG. 2] FIG. 2 is a cross-sectional view schematically illustrating a configuration of a battery block of the embodiment.
[FIG. 3] FIG. 3 is a view illustrating a configuration of a battery pack of the embodiment.
[FIG. 4] FIG. 4 is a longitudinal cross-sectional view schematically illustrating the vicinity of an exit of a gas release duct of a first embodiment.
[FIG. 5] FIG. 5A is a longitudinal cross-sectional view schematically illustrating the vicinity of an exit of a gas release duct according to a first variation of the first embodiment, and FIG. 5B is a view illustrating the gas release duct with a lid being open.
[FIG. 6] FIG. 6A is a longitudinal cross-sectional view schematically illustrating the vicinity of an exit of a gas release duct according to a second variation of the first embodiment, and FIG. 6B is a view illustrating the gas release duct with a lid being open. FIGS. 6C-6F are views illustrating other examples.
[FIG. 7] FIG. 7 is a longitudinal cross-sectional view schematically illustrating the vicinity of an exit of a gas release duct according to a third variation of the first embodiment.
[FIG. 8] FIG. 8 is a longitudinal cross-sectional view schematically illustrating only a gas release duct of a second embodiment.
[FIG. 9] FIG. 9 is a longitudinal cross-sectional view schematically illustrating the vicinity of an exit of a gas release duct according to a first variation of the second embodiment.
[FIG. 10] FIG. 10 is a view schematically illustrating a battery module of a third embodiment.
[FIG. 11] FIG. 11 is a partial cross-sectional view schematically illustrating a configuration of a battery pack of an embodiment.
[FIG. 12] FIG. 12 is a partial cross-sectional view schematically illustrating a configuration of another battery pack of the embodiment.
[FIG. 13] FIG. 13 is a view schematically illustrating a gas release duct according to a second variation of the second embodiment.
[FIG. 14] FIG. 14 is a view schematically illustrating a battery pack of a variation of the third embodiment.
[FIG. 15] FIG. 15A is a plan view illustrating a lid, and FIG. 15B is a cross-sectional view taken along the line XVB-XVB of FIG. 15A.

### DESCRIPTION OF EMBODIMENTS

Prior to description of embodiments of the present invention, it will be described how the inventors arrived at the present invention.

In general, in providing an exhaust passage to exhaust gas from a pack structure, an exhaust passage ensuring communication between the outside and the interior of the pack structure is formed to ensure and facilitate the exhaustion. However, when a large capacity battery pack is mounted in a vehicle such as an automobile, water, or the like may enter the battery pack if the vehicle runs on a flooded road, or the like. Thus, in general, a case accommodating a plurality of battery modules is hermetically closed so that the battery pack has a waterproof property. Thus, the exhaust passage also has to be hermetically closed for the waterproof property.

As described above, the battery pack has to have two opposite functions, that is, the battery pack has to be normally hermetically closed, but when gas is generated in the battery pack, the gas has to be rapidly released outside the battery pack. Such a problem has first arisen when a large capacity battery pack is used outdoors. To solve the problem, the present invention was devised by the present inventors.

Embodiments of the present invention will be described in detail below with reference to the drawings. In the drawings, like reference characters have been used to designate elements having substantially the same functions for the sake of brevity of description. A minimum unit of a set of a plurality of cells is referred to as a battery block. A unit formed by combining and accommodating multiple ones of the battery block in a housing to have a predetermined voltage and predetermined capacity is referred to as a battery module. A predetermined number of battery modules combined with each other as a power supply for electric equipment or electrically driven devices is referred to as a battery pack. With this configuration, combining standardized battery modules with each other allows application to power supplies for various electric equipment or electrically driven devices, and battery modules and battery packs can be easily produced at low cost.

### (First Embodiment)

### <Cell>

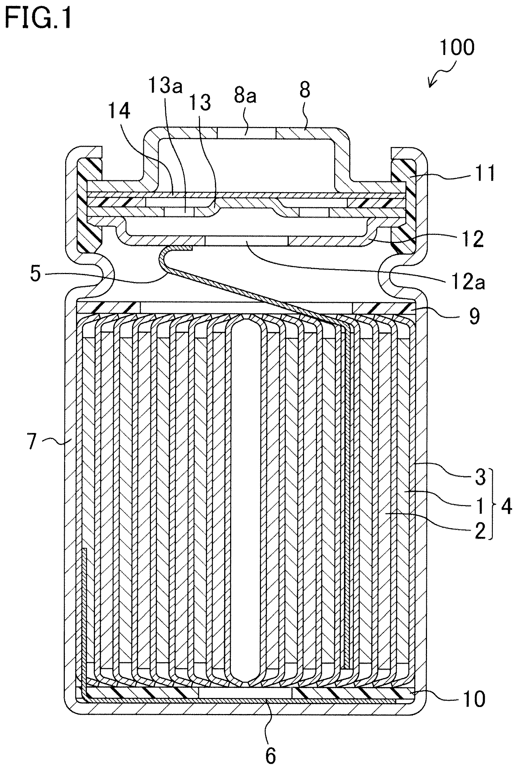

FIG. 1 is a cross-sectional view schematically illustrating a configuration of a battery 100 used in a battery block of a first embodiment. Note that the battery used in the battery block of the present embodiment may be a battery which can also be used alone as a power supply of portable electronic devices such as lap top computers (hereinafter, batteries used in a battery block are referred to as "cells"). In this case, a high-performance general-purpose battery can be used as the cell in the battery block, and thus, performance enhancement and const reduction of the battery block can easily be made.

As the cell 100 of the present embodiment, for example, a cylindrical lithium ion secondary battery as illustrated in FIG. 1 may be used. The lithium ion secondary battery has a general configuration, and includes a safety mechanism to release gas outside the battery when the pressure in the battery is increased due to the occurrence of an internal short-circuit, or the like. With reference to FIG. 1, a specific configuration of the cell 100 will be described below.

As illustrated in FIG. 1, an electrode group 4 formed by winding a positive electrode 2 and a negative electrode 1 with a separator 3 interposed between the positive electrode 2 and the negative electrode 1 is accommodated in a cell case 7 together with a nonaqueous electrolyte. Insulating plates 9, 10 are disposed above and under the electrode group 4, respectively. The positive electrode 2 is joined to a filter 12 via a positive electrode lead 5, and the negative electrode 1 is joined to a bottom of the cell case 7 via a negative electrode lead 6, the bottom also serving as a negative electrode terminal.

The filter 12 is connected to an inner cap 13, and a raised section of the inner cap 13 is joined to a metal valve plate 14. Moreover, the valve plate 14 is connected to a terminal plate 8 also serving as a positive electrode terminal. The terminal plate 8, the valve plate 14, the inner cap 13, and the filter 12 together seal an opening of the cell case 7 via a gasket 11.

When the pressure in the cell 100 is increased due to an internal short-circuit, or the like formed in the cell 100, the valve body 14 expands toward the terminal plate 8, and if the joint between the inner cap 13 and the valve body 14 is released, a current path is interrupted. When the pressure in the cell 100 further increases, the valve body 14 ruptures. Thus, gas generated in the cell 100 is released outside via a through hole 12a of the filter 12, a through hole 1 3a of the inner cap 13, the ruptured part of the valve body 14, and an opening portion 8a of the terminal plate 8.

Note that the safety mechanism to release the gas generated in the cell 100 to the outside is not limited to the structure illustrated in FIG. 1, and may have other structures.

### <Battery Module>

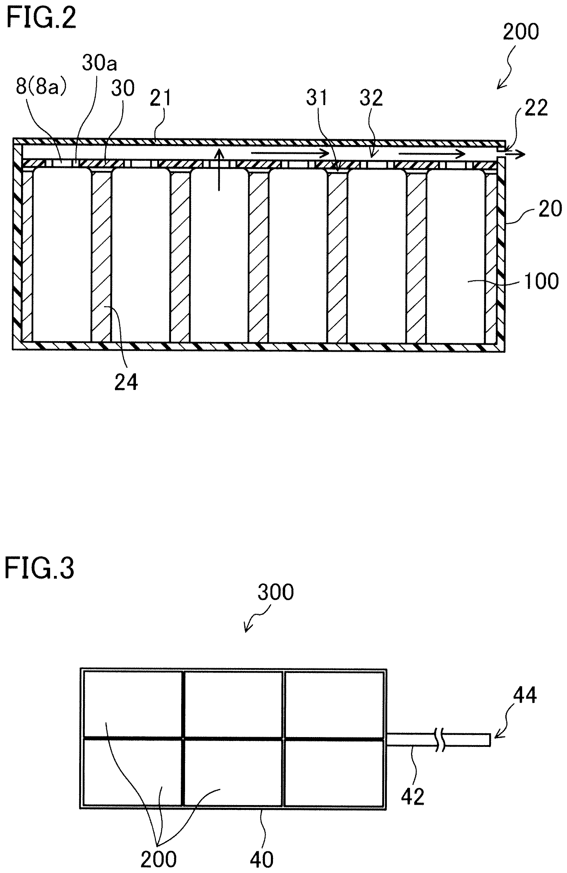

FIG. 2 is a cross-sectional view schematically illustrating a configuration of a battery module 200 of the present embodiment. In the present embodiment, one or more battery blocks are aligned in the battery module 200. The cells 100 in one battery block are connected to each other in parallel.

FIG. 2 is a cross section schematically illustrating part of one battery block in which the plurality of cells 100 are aligned and connected to each other in parallel (cross sections of the cells are not hatched for clarity). The battery block in the module is configured such that the plurality of cells 100 are accommodated in a container 20. Note that the cells 100 are inserted into cylindrical through holes formed in a cooling block 24 accommodated in the container 20. Moreover, as illustrated in FIG. 1, each cell 100 includes the opening portion 8a through which the gas generated in the cell 100 is released outside the cell.

A flat plate (plate-like member) 30 disposed on one side of the plurality of cells 100 (to face the positive electrode terminals 8 in the present embodiment) partitions the container 20 into accommodation section 31 accommodating the plurality of cells 100 and an exhaust passage section 32 via which gas released through the opening portion 8a of the cell 100 is released outside the container 20. The opening portions 8a of the cells 100 are in communication with the exhaust passage section 32 via openings 30a formed in the flat plate 30.

The exhaust passage section 32 is formed between the flat plate 30 and an outer plate 21 of the container 20. The gas released through the opening portion 8a of the cell 100 is released to the exhaust passage section 32 via the opening 30a formed in the flat plate 30, and then is released outside the container 20 from an outlet 22 provided to the container 20.

Note that the flat plate 30 is disposed to be intimately in contact with ends on the one side of the cells 100 (in the present embodiment, ends on the side closer to the positive electrode terminals 8), so that the accommodation section 31 is hermetically closed with the flat plate 30. Thus, the gas released from the opening portion 8a of the cell 100 via the opening 30a of the flat plate 30 to the exhaust passage section 32 does not enter the accommodation section 31.

### <Battery Pack>

FIG. 3 is a top view schematically illustrating a battery pack 300 according to the present embodiment without an upper lid of a case 40. The battery pack 300 includes a plurality of battery modules 200, 200, ... (six battery blocks in the present embodiment) accommodated in the case 40, and is provided with a gas release duct 42.

In the battery pack 300, the exhaust passage sections 32 of the battery modules 200, 200, ... are connected to the gas release duct 42 via the outlets 22, and gas generated in any of the cells 100 flows through the exhaust passage section 32, the outlet 22, and the gas release duct 42, and is released outside the battery pack 300.

An exit 44 of the gas release duct 42 is arranged in a position which is safe for gas release. For example, when the battery pack 300 is mounted in an electric vehicle, the battery pack 300 is arranged, between a passenger compartment and an exterior plate, or under a car body so that the exit 44 faces the ground. This arrangement is safe for passengers and people in the vicinity of the vehicle, and prevents gas from being blown to flammable materials inside the vehicle. Note that the installation position of the exit 44 of the gas release duct 42 depends on equipment or devices in which the battery pack 300 is used, or on the installation position of the battery module 300.

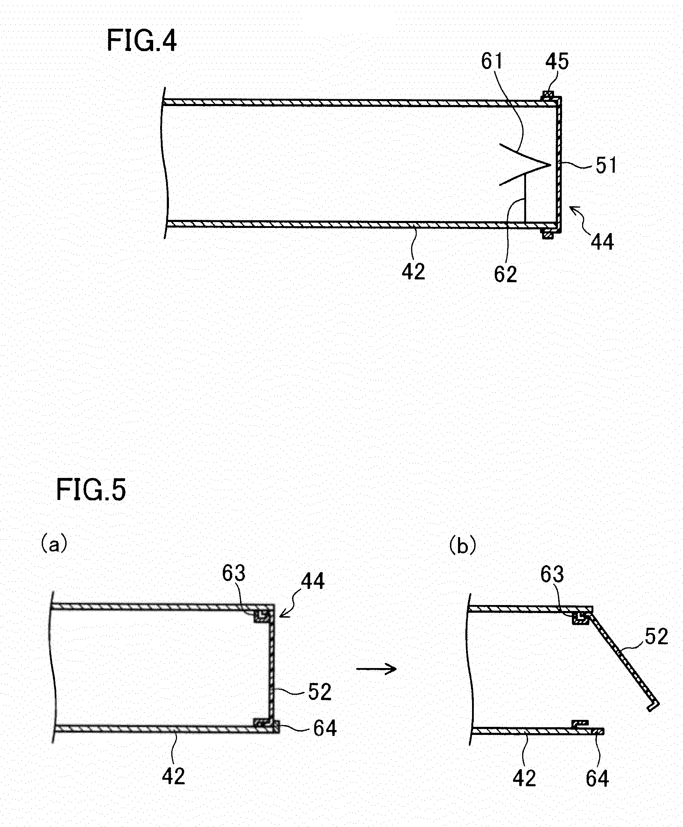

At the exit 44 of a gas release path of the gas release duct 42, as illustrated in FIG. 4, a lid 51 made of a waterproof member is disposed. The lid 51 is a sheet-like member, and flatly closes the exit 44. A circumferential section of the sheet is arranged to cover around an outer circumference of the exit 44 of the gas release duct 42, and the section is pressed by a ring-shaped pressing member 45, thereby fixing the lid 51 to the gas release duct 42. The lid 51 protects the gas release duct 42 from entry of water from the outside into the battery pack 300. Moreover, when the lid 51 is a sheet member made of a waterproof moisture permeable member such as GORE-TEX, condensation in the battery pack 300 can be prevented.

In the gas release duct 42, an opening member 61 is disposed near the exit 44. The opening member 61 is in the shape of a circular cone, and is supported by a supporting portion 62 so that a tip of the circular cone faces the lid 51, and a center axis of the circular cone is substantially orthogonal to a flat portion of the lid 51 closing the exit 44.

When one of the cells 100 is in an abnormal state, and generates gas therein, the gas is released from the cell 100 at almost the speed of sound. When the gas flows through the gas release duct 42, and reaches the exit 44, the pressure of the gas is applied to an inner surface of the circular cone, which is the opening member 61, so that force of the pressure breaks the supporting portion 62, and the opening member 61 hits the lid 51. Since the tip of the opening member 61 first crashes into the lid 51, the acute tip breaks through the lid 51, and the gas is released outside through the broken section. Note that the supporting portion 62 has such strength that the supporting portion 62 is not broken or deformed at a magnitude of vibration caused by an earthquake or in driving the vehicle.

The gas generated from the cell 100 has a high temperature, and the amount of the generated gas is larger than the capacity of the exhaust passage 32 in the battery pack 300. Thus, it is preferable to rapidly release the gas outside the battery pack 300. In the present embodiment, as soon as the gas reaches the lid 51, a hole is formed in the lid 51. Thus, the gas is rapidly released outside.

As described above, the lid 51 is disposed to hermetically close the exit 44 of the gas release duct 42, and the opening member 61 is also provided, so that it is possible to ensure prevention of entry of water from the outside into the release duct 42 and the battery pack 300, and it is possible to rapidly release gas generated from the cell 100 to the outside. Moreover, when the exit 44 of the gas release duct 42 is installed in the predetermined position as described above, gas can be safely released. Note that the installation position of the exit 44 of the gas release duct 42 depends on equipment in which the battery pack 300 is used, or the installation position of the battery pack 300. The battery module 200 including the cell 100 from which the gas has been released has to be replaced with a new battery module 200. Here, the gas release duct 42 is also changed to provide a new lid 51 and a new opening member 61.

### -First Variation-

FIG. 5 illustrates a lid 52 and an opening member according to a first variation of the present embodiment. Components other than the lid 52 and the opening member are the same as those described above. In the first variation, the lid 52 hermetically closes an exit 44 of a gas release duct 42. The lid 52 is made of the same waterproof material as the above-described lid 51. The material for the lid 52 may be a waterproof moisture permeable member.

In the first variation, one end of the lid 52 is fixed to the gas release duct 42 by a first fixing member 63, and the other end of the lid 52 is fixed to the gas release duct 42 by a second fixing member 64. At a magnitude of vibration caused by an earthquake or in driving the vehicle, the lid 52 remains firmly fixed by the first and second fixing members 63, 64. However, when the pressure of gas generated from a cell 100 is applied to the lid 52, force of the pressure deforms the second fixing member 64, so that the lid 52 is outwardly movable from the gas release duct 42. The end fixed by the first fixing member 63 serves as a support point, and the lid 52 is outwardly moved by the pressure of the gas as if a door were opened, thereby releasing the gas outside.

In the present variation, the first and second fixing members 63, 64 are opening members.

Also in the present variation, it is possible to ensure prevention of entry of water from the outside into the release duct 42 and the battery pack 300, and it is possible to rapidly release gas generated from the cell 100 to the outside. Moreover, when the exit 44 of the gas release duct 42 is installed in the predetermined position as described above, gas can be safely released.

The lid 52 may be configured such that a sheet member made of a waterproof moisture permeable member such as GORE-TEX is attached to a ring-shaped outer frame made of resin or metal so that a center section of the lid 52 is made of the moisture permeable material. The structure of fixing the lid 52 by the second fixing member 64 may be an engagement structure, a fitting structure, or a fixedly adhered structure. Other than deformation of the second fixing member 64 to render the lid 52 movable, the engagement structure may be released to render the lid 52 movable, or other fixing structures may be broken to render the lid 52 movable.

### -Second Variation-

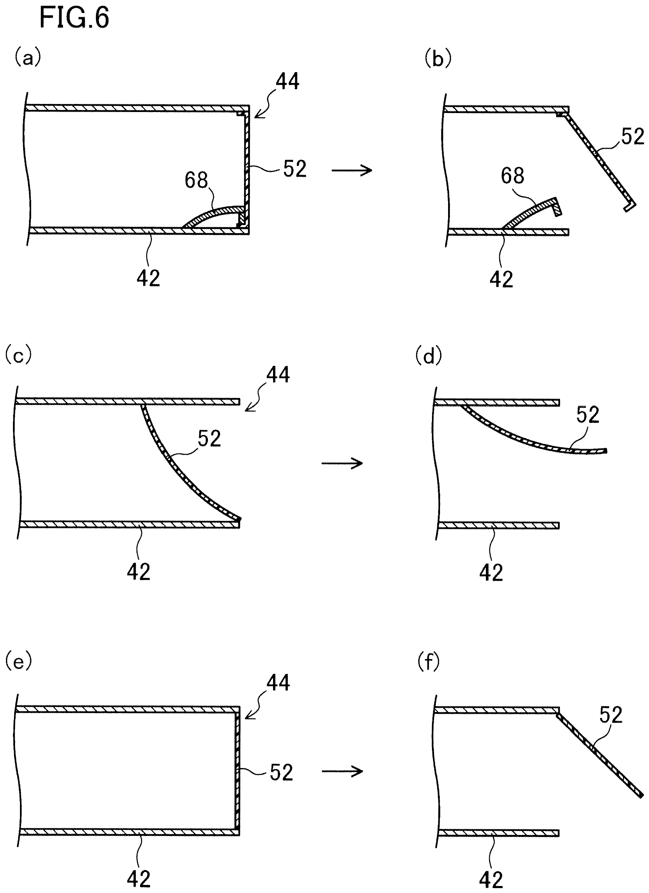

FIGS. 6A, 6B illustrate a lid 52 and an opening member according to a second variation of the present embodiment. Components other than the lid 52 and the opening member are the same as those described above. In the second variation, the lid 52 hermetically closes an exit 44 of a gas release duct 42. The lid 52 is made of a waterproof material. The material for the lid 52 may be a waterproof moisture permeable member.

In the second variation, one end of the lid 52 is fixed to the gas release duct 42, and the other end of the lid 52 is fixed to the gas release duct 42 by a fixing member 68. The fixing member 68 is made of a shape-memory alloy or bimetal which deforms at or above a certain temperature.

At a magnitude of vibration caused by an earthquake or in driving the vehicle, the lid 52 remains firmly fixed by the fixing member 68. However, when gas generated from a cell 100 reaches the lid 52, heat of the gas deforms the fixing member 68 to outwardly move and open the lid 52 from the gas release duct 42, thereby releasing the gas outside. At or above a certain temperature, the fixing member 68 releases the engagement with the lid 52.

In the present variation, the fixing member 68 is an opening member. Moreover, as illustrated in FIGS. 6A-6F, the lid 52 may be made of a shape-memory alloy or bimetal which deforms at or above a certain temperature. When gas generated form the cell 100 reaches the lid 52, heat of the gas deforms the lid 52 to outwardly open from the gas release duct 42, thereby releasing the gas outside.

Also in the present variation, it is possible to ensure prevention of entry of water from the outside into the release duct 42 and the battery pack 300, and it is possible to rapidly release gas generated from the cell 100 to the outside. Moreover, when the exit 44 of the gas release duct 42 is installed in the predetermined position as described above, gas can be safely released.

The lid 52 may be configured such that a sheet member made of a waterproof moisture permeable member such as GORE-TEX is attached to a ring-shaped outer frame made of resin or metal, so that a center section of the lid 52 is made of the moisture permeable material.

### -Third Variation-

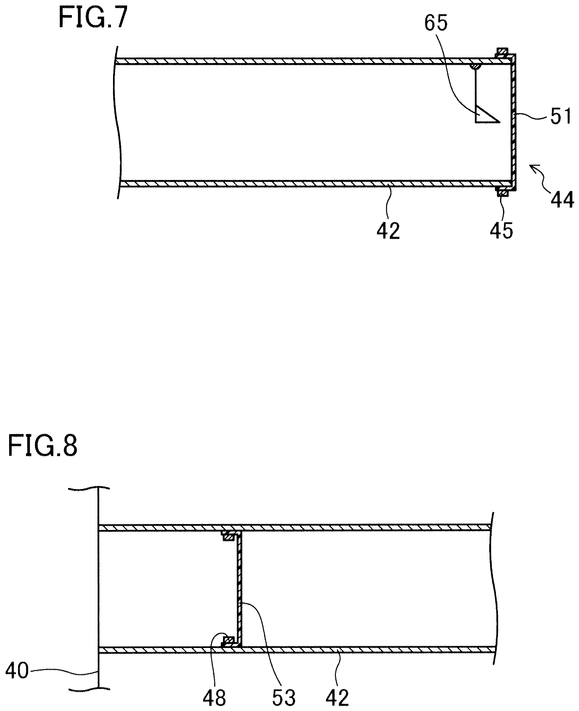

FIG. 7 illustrates a lid 51 and an opening member 65 according to a third variation of the present embodiment. Components other than the opening member 65 are the same as those of the first embodiment. In the third variation, the lid 51 hermetically closes an exit 44 of a gas release duct 42. The lid 51 is made of a waterproof material. The material for the lid 51 may be a waterproof moisture permeable member.

In the third variation, the opening member 65 is a pendulum including a stick and a weight which has an acute tip and is attached to one end of the stick. The other end of the stick is fixed to an inner wall of the gas release duct 42, and remains fixed at a magnitude of vibration caused by an earthquake or in driving the vehicle. However, applying the pressure of gas generated from a cell 100 to the opening member 65 unfixes the stick, so that the pendulum swings, thereby the acute tip of the weight breaks through the lid 51, which releases the gas outside.

Also in the present variation, it is possible to ensure prevention of entry of water from the outside into the release duct 42 and the battery pack 300, and it is possible to rapidly release gas generated from the cell 100 to the outside. Moreover, when the exit 44 of the gas release duct 42 is installed in the predetermined position as described above, gas can be safely released.

### -Fourth Variation-

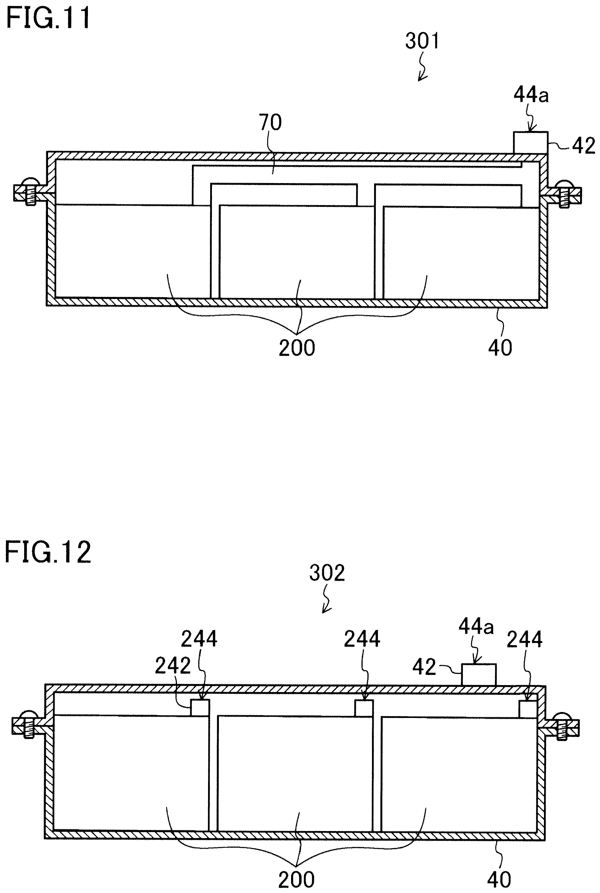

FIG. 11 illustrates a battery pack 301 according to a fourth variation of the present embodiment. In contrast to FIG. 3, a partial cross-sectional view of the battery pack 301 seen from the side is illustrated in FIG. 11 with a case 40 being cut out. In the present variation, outlets of battery modules 200, 200, ... are connected to or in communication with an inner duct 70 disposed in the battery pack 301. An exit of the inner duct 70 is connected to a gas release duct 42 of the battery pack 301. An exit 44a of the gas release duct 42 is hermetically closed with a lid which is a sheet member made of a waterproof moisture permeable member such as GORE-TEX, and is provided with an opening member to open the lid. As the lid and the opening member, any lid and any opening member of the above-described present embodiment or the above-described variations may be used.

Also in the present variation, it is possible to ensure prevention of entry of water from the outside into the release duct 42 and the battery pack 301, and it is possible to rapidly release gas generated from the cell 100 to the outside.

### -Fifth Variation-

FIG. 12 illustrates a battery pack 302 according to a fifth variation of the present embodiment. In contrast to FIG. 3, a partial cross-sectional view of the battery pack 302 seen from the side is illustrated in FIG. 12 with a case 40 being cut out. In the present variation, a short release duct 242 for module use protrudes from an outlet of each of battery modules 200, 200, .... An exit 244 of the release duct 242 for module use exists in the battery pack 302, and is hermetically closed with a lid which is a sheet member made of a waterproof moisture permeable member such as GORE-TEX. The lid may be opened by the opening member as described above, or the lid may be opened by the pressure or the temperature of gas without being provided with an opening member. An exit 44a of a gas release duct 42 of the battery pack 302 is also hermetically closed with a lid which is a sheet member made of a waterproof moisture permeable member such as GORE-TEX, and is provided with an opening member to open the lid. Further, as the lid and the opening member, any lid and any opening member of the above-described present embodiment or the above-described variations can be used. Note that the exit 244 of the release duct 242 for module use includes no lid, and the exit 244 may remain open.

Also in the present variation, it is possible to ensure prevention of entry of water from the outside into the release duct 42, the battery pack 302, and battery modules 200, and it is possible to rapidly release gas generated from the cell 100 to the outside.

### (Second Embodiment)

A battery pack according to a second embodiment will be described with reference to FIGS. 1-3, 8.

### <Cell>

FIG. 1 is a cross-sectional view schematically illustrating a configuration of a cell 100 used in a battery module of the second embodiment. Note that the cell 100 is the same as the cell 100 of the first embodiment, and thus the structure, and the like are as described above.

### <Battery Module>

FIG. 2 is a cross-sectional view schematically illustrating a configuration of a battery module 200 of the present embodiment. Note that the battery module 200 is the same as the battery module 200 of the first embodiment, and thus the structure, and the like are as described above.

### <Battery Pack >

FIG. 3 is a view schematically illustrating a battery pack 300 of the present embodiment seen from above without an upper lid of a case 40. Note that components except a lid and an opening member of the battery pack 300 of the present embodiment are the same as those of the battery pack 300 of the first embodiment, and thus the structure, and the like of the components except the lid and the opening member are as described above.

As illustrated in FIG. 8 in which only a gas release duct is illustrated in a cross section to show the interior of the gas release duct, a lid 53 of the present embodiment is disposed in a position on a release path of a gas release duct 42 and near the case 40 of the battery pack 300. The lid 53 is made of a waterproof moisture permeable membrane made of resin such as a membrane of GORE-TEX. The lid 53 is fixed in the gas release duct 42 by a ring-shaped pressing member 48, thereby hermetically closing the gas release duct 42. Thus, it is possible to ensure prevention of entry of water from the outside into the battery pack 300. Moreover, water in the battery pack 300 is released as water vapor through the lid 53 to the outside of the battery pack 300, which can prevent condensation in the battery pack 300.

The lid 53 of the present embodiment is disposed in the position near the case 40 of the battery pack 300. Thus, the distance from the cell 100 to the lid 53 of the present embodiment is smaller than the distance from the cell 100 to the lids 51, 52 of the first embodiment. Therefore, gas generated from the cell 100 hits the lid 53 with the gas being at a relatively high temperature. Due to the temperature of the gas, a material of the lid 53 is melted, or the strength of the material of the lid 53 is reduced. At the melted portion or at the portion at which the strength is reduced, the material of the lid 53 is broken due to the pressure of the gas, thereby opening the release path of the gas release duct 42. In this way, the generated gas is rapidly released outside the battery pack 300.

Also in the present variation, it is possible to ensure prevention of entry of water from the outside into the battery pack 300, and it is possible to rapidly release gas generated from the cell 100 to the outside. Moreover, when the exit of the gas release duct 42 is installed in the predetermined position as described above, gas can be safely released. Since no opening member is necessary in the present embodiment, the structure of the present embodiment is simpler, and can be fabricated at lower cost than that of the first embodiment. The present embodiment is preferably applied to the case where there is no water storage section in the gas release duct 42, for example, in the case where the gas release duct 42 horizontally extends, or horizontally and downwardly extends. When a lid is provided to the exit 44 as in the case of the first embodiment, there may be a water storage section in the gas release duct 42.

### -First Variation-

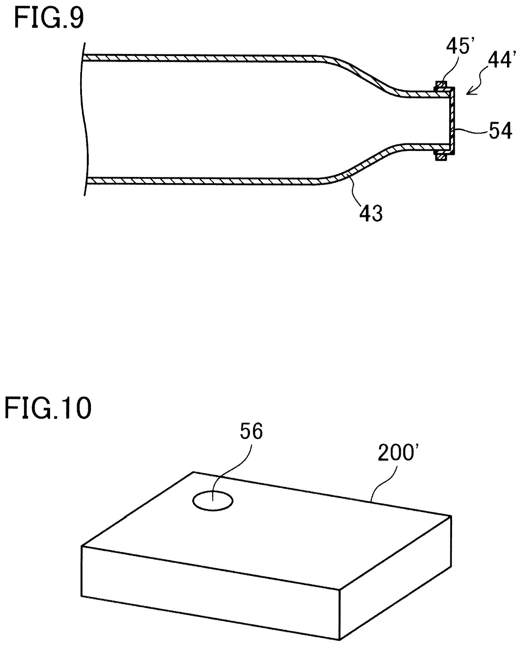

FIG. 9 illustrates a gas release duct 43 and a lid 54 according to a first variation of the present embodiment. Components other than the gas release duct 43 and the lid 54 have the same structures and are made of the same members as the second embodiment described above. In the variation, the lid 54 hermetically closes an exit 44' of the gas release duct 43. The lid 54 is made of a waterproof moisture permeable membrane made of the same resin as the above-described lid 53, and is fixed to the gas release duct 43 by a ring-shaped pressing member 45'.

In the present variation, the internal diameter of the gas release duct 43 reduces at the periphery of the exit 44', thereby narrowing a gas release path. Thus, when gas is generated from a cell 100, the velocity of flow of the gas increases at the exit 44' of the gas release duct 43, so that great impact force is exerted on the lid 54, which breaks the lid 54. In this way, the gas is rapidly released outside.

Also in the present variation, it is possible to ensure prevention of entry of water from the outside into the release duct 43 and the battery pack 300, and it is possible to rapidly release gas generated from the cell 100 to the outside. Moreover, when the exit 44' of the gas release duct 43 is installed in the predetermined position as described above, gas can be safely released. Moreover, since no opening member is necessary, the structure can be formed simply at low cost.

### -Second Variation-

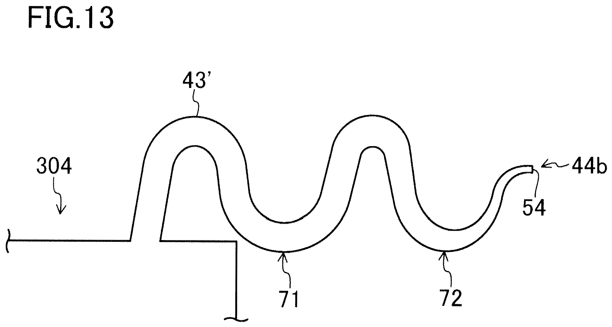

FIG. 13 illustrates a battery pack 304 including a gas release duct 43' and a lid 54 according to a second variation of the present embodiment. Note that components other than the gas release duct 43' have the same structures and are made of the same members as the first variation described above.

In the present variation, the release duct 43' winds several number of times in the vertical direction to have a zigzag structure. The release duct 43' includes two water storage sections 71, 72 which are located at lower positions than upstream or downstream sections thereof. The water storage sections 71, 72 are located at the lowest positions than peripheral sections thereof. Assuming that the release duct 43' is a curve, the water storage sections 71, 72 correspond to minimum values.

As in the first variation, the internal diameter of the gas release duct 43' of the present variation also reduces at the periphery of an exit 44b, thereby narrowing a gas release path. Thus, the velocity of flow of gas increases at the exit 44b of the gas release duct 43', so that great impact force is exerted on the lid 54, which breaks the lid 54. In this way, the gas is rapidly released outside.

In the present variation, for example, if the vehicle runs on a flooded road after the lid 54 is broken, water may enter the gas release duct 43' from the exit 44b of the gas release duct 43'. However, even when water enters the gas release duct 43' from the exit 44b, the water is stored in the water storage sections 71, 72, so that it is possible to prevent the water from flowing into the battery pack 304. Thus, even after the lid 54 is broken, it is possible to prevent entry of water from the outside into the battery pack 304. Moreover, the present variation also provides the advantages of the first variation.

### (Third Embodiment)

A battery pack of a third embodiment uses a battery module 200' illustrated in FIG. 10. As illustrated in FIG. 3, six battery modules 200' are accommodated in a case 40. Note that cells each have the structure illustrated in FIG. 1.

In the present embodiment, a lid 56 made of a waterproof member is attached to a container of the battery module 200'. That is, a hole is formed in the container of the battery module 200', and the hole is hermetically closed with the lid 56. Thus, no lid is attached to a gas release duct 42. When the lid 56 is attached to the battery module 200', gas generated from a cell 100 hits the lid 56 with the gas being at a high temperature and a high speed, so that the lid 56 is melted or broken by the heat or the pressure of the gas, which allows the gas to flow through the gas release duct 42 even when no opening member is provided.

In the present embodiment, the lid 56 can ensure prevention of entry of water from the outside into the battery module 200'. Moreover, when the lid 56 is made of a waterproof moisture permeable member, condensation in the battery module 200' can be prevented. Since no opening member is necessary, the structure can be fabricated simply at low cost. Moreover, when an exit 44 of the gas release duct 42 is installed in the predetermined position as described above, gas can be safely released.

### - Variation-

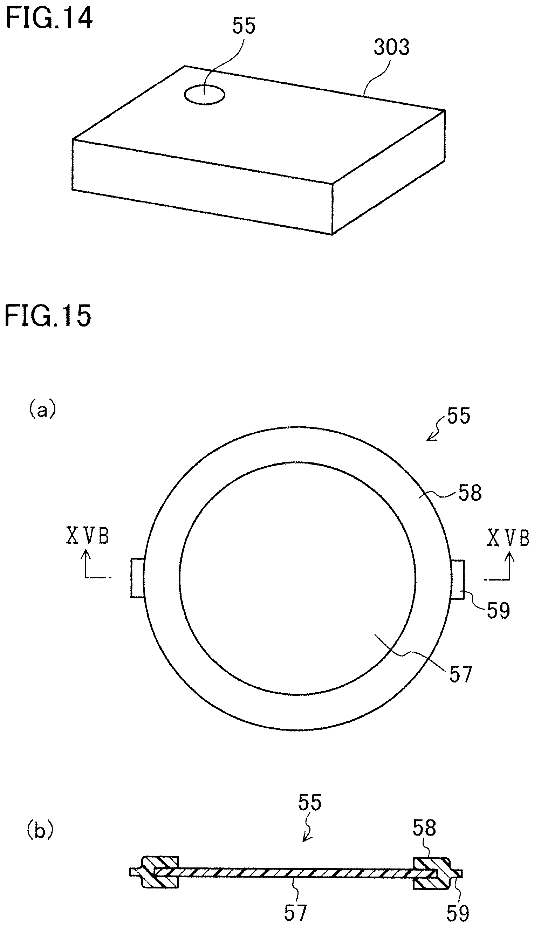

FIG. 14 illustrates a battery pack 303 according to a variation of the present embodiment. In the present variation, a structure similar to that of the battery module 200' illustrated in FIG. 10 is used for the battery pack 303. Note that battery modules accommodated in the battery pack 303 may be the battery module illustrated in FIG. 2, or the battery module illustrated in FIG. 10.

In the present variation, a lid 55 made of a waterproof member is attached to a case of the battery pack 303. That is, a hole is formed in the case of the battery pack 303, and the hole is hermetically closed with the lid 55. Since the lid 55 is directly attached to the battery pack 303, gas generated from a cell 100 hits the lid 55 with the gas being at a high temperature and at a high speed, so that the lid 55 is melted or broken by the heat or the pressure of the gas, which rapidly releases the gas to the outside of the battery pack 303 even when no opening member is provided.

As illustrated in FIG. 15, the lid 55 used in the present variation is a disk-shaped member in which a sheet-like waterproof moisture permeable member 57 is supported by a doughnut-like supporting member 58. The lid 55 is fixed to the case of the battery pack 303 by engagement parts 59 projecting from an outer circumference of the supporting member 58.

In the present variation, the lid 55 can ensure prevention of entry of water from the outside into the battery pack 303, and can prevent condensation in the battery pack 303. Since no opening member is necessary, the structure can be simply fabricated at low cost.

### (Other Embodiments)

The above-described embodiments are examples, and are not intended to limit the present invention. The structure of the opening member and the opening mechanism are not specifically limited, and any structure and mechanism may be used as long as it is possible to ensure opening of the lid by gas outflow pressure, a gas flow, heat, or the like. The configurations of the battery module and the battery pack are not limited to the above examples, but for example, the number of battery modules included in a battery pack may be greater than or smaller than six. Battery modules in a battery pack may be arranged in a row, or in three or more rows. Alternatively, battery modules may be stacked in two or more levels.

A substance which generates heat by the pressure or the heat of gas to melt or break the lid may be disposed as an opening member at the periphery of or in contact with the lid. A method for fixing the lid to the gas release duct is not limited to fixing by the pressing member, and the lid may be fixed by adhesion using an adhesive, or other fixing methods may be used.

The battery pack of FIG. 11 or FIG. 12 may be used in the second and third embodiments and in the variations of the second and third embodiments. Alternatively, the lid 55 illustrated in FIG. 15 may be used in the first and second embodiments and the variations of the first and second embodiments.

The installation position of a set of the lid and the opening member of the first embodiment is not limited to a position near the exit 44 of the gas release duct 42, but may be on the gas release path of the gas release duct 42.

In the second embodiment, as the lid, a resin film which is a waterproof material and has a low melting point, for example, a polyethylene film, a polypropylene film, or the like may be used. Alternatively, part of a waterproof moisture permeable membrane may be replaced with such a resin film so that the portion made of the resin film is first broken or melted.

Also when a power supply unit includes a plurality of battery packs aligned in the horizontal direction, a plurality of battery packs stacked in the vertical direction, or a plurality of battery packs aligned and stacked in the horizontal and vertical directions, providing each battery pack with a gas release duct in communication with the outside allows use of the above-described embodiment without modification. Alternatively, the gas release ducts provided to the battery packs may be collected together at a certain position of the ducts into a collective duct, and a lid may be provided to the collective duct.

The battery module may be provided with a sensor (heat sensor, pressure sensor, gas sensor, etc.) by which the generation of gas is detected when a cell accommodated in the battery module is in an abnormal state and generates gas, and the gas is released outside the cell. Here, the heat sensor detects the generation of the gas based on the temperature. Thus, an opening member (for example, the opening member 65 of the third variation of the first embodiment) may be operated based on a signal from the sensor which has detected the generation of the gas.

Alternatively, a thermal fuse may be provided, and an opening member may be operated based on a signal generated when the thermal fuse is blown.

### INDUSTRIAL APPLICABILITY

As described above, a battery pack according to the present invention can ensure prevention of entry of water from the outside, and is useful as power supplies, or the like of various equipment or devices.

### DESCRIPTION OF REFERENCE CHARACTERS

- 40: Case
- 42, 43, 43': Gas Release Duct
- 44, 44', 44a, 44b: Exit
- 51, 52, 53, 54, 55, 56: Lid
- 61, 65: Opening Member
- 63: First Fixing Member
- 64: Second Fixing Member
- 68: Fixing Member
- 71, 72: Water Storage Section
- 100: Cell
- 200: Battery Module
- 300, 301, 302, 303, 304: Battery Pack

## Claims

1. A battery pack (300) comprising:
a plurality of cells (100) which are lithium ion secondary batteries;
a plurality of exhaust passage sections (32) which are adjacent to the cells (100) and allows a flow of gas generated from at least one of the cells (100); and
a plurality battery modules (200) accommodating the plurality of cells (100) and the exhaust passage sections (32), wherein the exhaust passage sections (32) are connected to a gas release duct (42) via outlets (22),and
a case (40) accommodating the plurality of battery modules (200), wherein
an exit(44) of the gas release duct (42) through which the gas having flowed through the exhaust passage sections (32) is released to the outside is formed in the case (40),
the exit (44) is hermetically closed with a lid (51) made of a waterproof member, and
the lid (51 - 56) is opened by the gas generated from the cell (100),
wherein at least part of the lid (51) comprises a waterproof moisture permeable member.

2. The battery pack of claim 1, wherein
the gas release duct (42) winds several number of times in the vertical direction, and
the gas release duct (42) includes a water storage section (71, 72) on a release path of
the gas release duct, the water storage section (71, 72) being located at a lower position than upstream and downstream sections of the release path in a direction in which the gas is released.

## Patentansprüche

1. Batteriesatz (300, umfassend:
eine Vielzahl von Zellen (100), die Lithium-Ionen-Sekundärbatterien sind;
eine Vielzahl von Ausgabekanalabschnitten (32), die an die Zellen (100) angrenzen und einen Gasstrom ermöglichen, der von mindestens einer der Zellen (100) erzeugt wird; und
eine Vielzahl von Batteriemodulen (200), die die Vielzahl von Zellen (100) und die Ausgabekanalabschnitte (32) aufnehmen, wobei die Ausgabekanalabschnitte (32) über Auslässe (22) mit einer Gasauslassleitung (42) verbunden sind, und
ein Gehäuse (40), das die Vielzahl von Batteriemodulen (200) aufnimmt, wobei
in dem Gehäuse (40) ein Ausgang (44) der Gasauslassleitung (42) ausgebildet ist, durch den das Gas, das durch die Ausgabekanalabschnitte (32) geflossen ist, nach außen abgegeben wird,
der Ausgang (44) mit einem Deckel (51) aus einem wasserdichten Element hermetisch verschlossen ist, und
der Deckel (51 - 56) durch das aus der Zelle (100) erzeugte Gas geöffnet wird,
wobei mindestens ein Teil des Deckels (51) ein wasserdichtes, feuchtigkeitsdurchlässiges Element umfasst.

2. Batteriesatz nach Anspruch 1, wobei
die Gasauslassleitung (42) sich mehrere Male in vertikaler Richtung windet, und
die Gasauslassleitung (42) einen Wasserspeicherabschnitt (71, 72) auf einem Freigabepfad der Gasauslassleitung umfasst, wobei der Wasserspeicherabschnitt (71, 72) in einer Richtung, in der das Gas freigesetzt wird, an einer niedrigeren Position als stromaufwärts und stromabwärts gelegene Abschnitte des Freigabepfades angeordnet ist.

## Revendications

1. Batterie d'accumulateurs (300) comprenant :
une pluralité de piles (100) qui sont des batteries secondaires lithium-ion ;
une pluralité de sections de passage d'échappement (32) qui sont adjacentes aux piles (100) et permettent un écoulement du gaz généré par au moins une des piles (100) ; et
une pluralité de modules de batterie (200) recevant la pluralité de piles (100) et les sections de passage d'échappement (32), dans laquelle les sections de passage d'échappement (32) sont connectées à un conduit d'évacuation de gaz (42) via des sorties (22), et
un boîtier (40) recevant la pluralité de modules de batterie (200), dans laquelle
une sortie (44) du conduit d'évacuation de gaz (42) à travers lequel le gaz qui s'est écoulé à travers les sections de passage d'échappement (32) est évacué à l'extérieur est formée dans le boîtier (40),
la sortie (44) est fermée hermétiquement avec un couvercle (51) constitué d'un élément étanche à l'eau, et
le couvercle (51 - 56) est ouvert par le gaz généré par la pile (100),
dans laquelle au moins une partie du couvercle (51) comprend un élément perméable à l'humidité mais étanche à l'eau.

2. Batterie d'accumulateurs selon la revendication 1, dans laquelle
le conduit d'évacuation de gaz (42) est enroulé plusieurs fois en direction verticale, et
le conduit d'évacuation de gaz (42) comprend une section de stockage d'eau (71, 72) sur un chemin d'évacuation du conduit d'évacuation de gaz, la section de stockage d'eau (71, 72) étant située dans une position plus basse que les sections amont et aval du chemin d'évacuation selon la direction d'évacuation du gaz.
